# EUROPEAN PATENT SPECIFICATION

(11) **EP 3 094 191 B1**
(45) Date of publication and mention of the grant of the patent: **01.08.2018**
(21) Application number: 15700470.6
(22) Date of filing: 15.01.2015
(51) Int. Cl.: A23L 5/10, A23L 19/18, A23L 7/117

(54) **METHOD OF MAKING SNACK FOODS**
VERFAHREN ZUR HERSTELLUNG VON IMBISSEN
PROCÉDÉ DE FABRICATION D'ALIMENTS EN-CAS

(30) Priority: 15.01.2014 GB 201400658
(43) Date of publication of application: 23.11.2016
(73) Proprietor: Frito-Lay Trading Company GmbH, 3011 Bern (CH)
(72) Inventor: BOWS, John Richard, Lutterworth Leicestershire LE17 4EN (GB); BAILEY, Richard Andrew, Market Harborough Leicestershire LE16 7AS (GB); HERBERT, Oliver, Nottingham Leicestershire NG9 4ED (GB)
(74) Representative: Jenkins, Peter David
(86) International application number: PCT/EP2015/050713
(87) International publication number: WO 2015/107123

(56) References cited:
- GB-A- 2 481 272
- GB-A- 2 481 875
- GB-A- 2 489 972
- US-A1- 2006 182 869
- US-A1- 2008 138 480
- US-A1- 2008 206 424
- US-A1- 2010 009 055

## Description

The present invention relates to a method of making snack foods.

GB-A-2481272 discloses a method of manufacturing potato chips, in which potato slices are conveyed through a reservoir of oil in order to lipophilically condition the potato slices and thereafter the potato slices are conveyed through a flatbed microwave apparatus. The microwave apparatus is configured to define a plurality of successive independent microwave zones between the upstream and downstream ends of the microwave apparatus, each zone having a respective microwave attenuator at an upstream inlet and at a downstream outlet of the respective zone. The potato slices are preheated in a first preheating zone located towards an upstream end of the microwave apparatus. The first zone has a first microwave power value. The potato slices are explosively dehydrated in at least one second explosive dehydration zone located downstream of the first preheating zone. The explosive dehydration dries a body of the potato slices at a first drying rate. The second zone has a second microwave power value higher than the first microwave power value. The potato slices are then dried in a third drying microwave zone located downstream of the at least one second explosive dehydration zone.

US-A-2008/138480 describes a similar process of manufacturing potato chips, in which potato slices are conveyed through a reservoir of oil in order to lipophilically condition the potato slices and thereafter the potato slices are conveyed through a flatbed microwave apparatus.

This microwave-based production process can produce potato chips which have a light, crispy texture which is desired by consumers, and replaces a conventional frying process with a microwave explosive dehydration. The microwave explosive dehydration is controlled to achieve starch transitions which are correspondingly achieved in a fryer, so that texture is developed in the sliced potato during the microwave explosive dehydration which replicates the light, crispy texture achieved by a fryer.

The explosive dehydration is the texture development stage of the microwave process and is referred to as the primary microwave drying step. Potato slices enter the primary microwave stage at their original bulk moisture content, which is typically around 80 wt% moisture content on a wet basis. The potato slices are provided in a monolayer of singulated slices to prevent slices sticking together during the drying step and in order to improve microwave process stability. In order to generate a fried-like texture, the potato slices must be dried within a period of around 60 to 120 seconds to a final moisture content of typically from 10 to 20 wt% based on the total weight of the dried slices. The drying should be carried out below the glass transition temperature at the respective moisture content, which is a temperature of about 100 to 110°C.

After the texturizing step, it is necessary to dry the slice to a final moisture content of about 1.5 wt% based on the total weight of the slices.

For the further drying, it is necessary to ensure product quality as well as a cost-effective process.

By microwave drying food slices to an intermediate moisture content of around 10 to 20 wt%, a high degree of moisture variability may exist within the potato slices exiting the primary drying stage. A chip-to-chip moisture variability exists which is an inherent feature of rapid microwave drying. Such chip-to-chip moisture variability is affected by slice size and it has been found that slices have a diameter of below about 15 to 20mm when employing a microwave operating frequency of 896 MHz tend to dry significantly slower than the larger slices. Furthermore, there may be intra-chip moisture variability. This is exhibited by the outer 1 to 4 mm of the edge of the food slice having a much higher moisture content than away from the slice edge, which is a characteristic feature of the rapid microwave drying of thin food slices.

The problem with such moisture variability is that edges of chips or the chips themselves have a moisture content higher than that required to set a light crispy texture during the glass transition step.

If further microwave drying of the monolayer is employed, to dry the product from a moisture content of 10 to 20 wt% to a final potato chip moisture content of about 1.5 wt%, when no free water is present at low moisture content the microwave energy would preferentially heat the starch/oil and the slice temperature would quickly rise to above 100 °C. Also, the footprint required for monolayer drying is high, leading to high capital costs.

If the chips are dried from a moisture content of 10 to 20 wt% to a final potato chip moisture content of about 1.5 wt% in a conventional conductive oven, for example using heated air, employing chips of significant moisture variability can lead to various problems. In particular, parts of the chips would not have a rigid, set texture and there would be problems of the final chips exhibiting a glassy texture. There would be an increased risk of slices sticking together. In the final product there would be variable moisture content. There would be a risk of burning or scorching of the slices. In addition, the risk of acrylamide formation would be enhanced. In addition, the high temperature required in an oven for economically efficient drying, which is a temperature above 120°C, could lead to chips losing their crispy texture as a result of the starch moving back through the glassy state moisture transition, which is dependent on temperature.

Therefore, there exists a problem which is how to dry intermediate moisture content food slices, e.g. potato slices, in an economical process with such slices initially having a large moisture variability chip-to-chip and intra-chip (edge to centre) without losing a light crispy texture generated in a very high proportion of the slices.

The present invention aims at least partially to solve that problem.

Accordingly, the present invention provides a method of making snack foods according to claim 1.

Preferred features are defined in the dependent claims.

The present invention is predicated on the finding by the present inventors that since most of the food slices exiting the primary microwave dryer in the cooking step are typically free of surface water, and typically with their texture and shape set, the slices can be "deep bedded" for a short period, for example from 1 to 2 minutes, as they enter a second stage microwave dryer without any risk of the slices sticking or clumping together. A deep bed microwave multimode cavity has been chosen to solve the problem, because deep bedding the food slices is economically advantaged by minimising the footprint required to dry a large volume of food slices.

Furthermore, since the microwave energy self-seeks a higher moisture content region in food slices where most of the food slices have little free water present, the higher moisture content slices and higher moisture content slice edges can be rapidly dried to below the glass transition moisture content. The drying remains in a much lower temperature range than in a traditional hot air dryer, thus reducing the risk of starch retrogradation, which is exhibited as a loss of a crispy state as the starch moves back to the glassy state moisture transition.

By selecting the specific moisture content range exiting the primary microwave drier, a secondary deep bed microwave dryer can self-seek higher moisture content regions and higher moisture parts of potato slices which would otherwise risk sticking to other slices. By providing a selected initial moisture content range for the slices exiting the microwave cooking and entering the drying step, the microwave technology can readily be employed to achieve moisture levelling of the cooked food slices. The deep bed drying can overcome the initial high degree of moisture variability within the plurality of slices exiting the primary drying stage, in particular chip-to-chip moisture variability and intra-chip moisture variability, to provide, with a final finish-drying stage, a high quality uniformly dried food product with a typical final moisture content of about 1.5 wt%.

Embodiments of the present invention will now be described by way of example only, with reference to the accompanying drawings, in which:

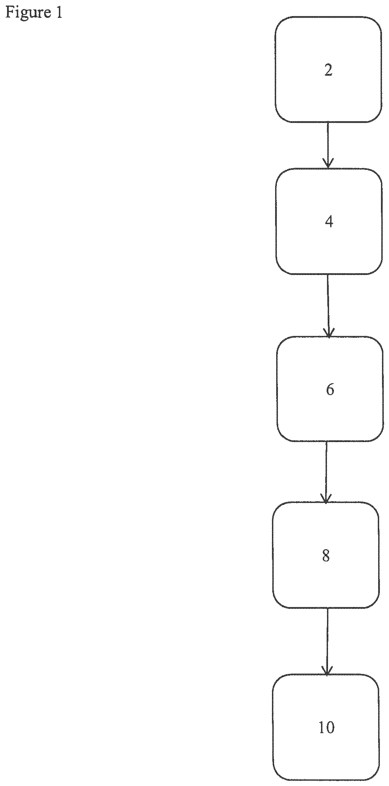

Figure 1 is a schematic diagram of a process flow of steps carried out in a method of making snack foods in accordance with an embodiment of the present invention.

Referring to Figure 1, a method of making snack foods in accordance with an embodiment of the present invention is illustrated as a process flow of steps.

In this embodiment the snack foods comprise potato chips produced from potato slices. However, the method of the invention may be used to make other snack foods from other starting ingredients. For example, slices of vegetables other than potato may be used, for example carrot, parsnip, beetroot, etc. The slices may be composed of a dough, which may contain vegetable matter in the form of fresh vegetable, dry vegetable or powdered vegetable, or any combination thereof.

In this embodiment, initially the plurality of potato slices is subjected to a lipophilically conditioning step 2. The snack food slices are immersed in a vegetable oil at a temperature of from 80°C to less than 100°C, optionally about 90°C, for a period of from 60 to 120 seconds, optionally about 90 seconds.

Thereafter, the lipophilically conditioned snack food slices are subjected to a microwave cooking step 4. In the cooking step 4 the microwave energy typically has a frequency of from 875 to 925 MHz, optionally about 900 MHz, or 2450 +/-50 MHz.

In the cooking step 4 the plurality of snack food slices are disposed in a monolayer with substantially all, optionally at least 80%, of the snack food slices being free from contact with any other snack food slice. During the microwave cooking, the plurality of snack food slices is disposed in a layer having a thickness of from 1 to less than 5 mm, optionally from 1 to 3 mm.

Prior to the cooking step 4, the moisture content of the snack food slices is typically an average value of at least 75 wt%%, optionally about 80 wt%, based on the total weight of the snack food slices. During the cooking step 4 the moisture content of the snack food slices is reduced. The cooking step 4 comprises microwave cooking the plurality of snack food slices to provide cooked snack food slices having an average moisture content of from 10 to 20 wt% based on the total weight of the snack food slices.

During the cooking step 4 the moisture content of the snack food slices is reduced within a period of from 30 to 180 seconds, optionally from 60 to 120 seconds.

During the cooking step 4 the temperature of the snack food slices is maintained below 110°C, optionally below 100°C.

After the cooking step 4 the cooked snack food slices are substantially rigid and typically have substantially randomly shaped non-planar opposite major surfaces. The cooked snack food slices are substantially free of surface water.

After the cooking step 4, there is a stacking step 6. In the stacking step the cooked snack food slices are disposed as a loosely packed bed having a thickness greater than the thickness of the layer of slices during the cooking step. The bed thickness is from 5 to 200 mm, optionally from 5 to 75 mm. Preferably, the loosely packed bed comprises from 30 to 80 vol% air based on the total volume of the bed.

In the stacking step 6 the cooked snack food slices are conveyed by a vibratory conveyor which increases the packing density and commonality of orientation of the cooked snack food slices in the loosely packed bed. The bed of snack food slices preferably comprises a plurality of sub-layers of the snack food slices, and preferably in each sub-layer the snack food slices are substantially commonly oriented. Optionally, in each sub-layer the snack food slices are oriented within an angle of +/- 30 degrees to the horizontal.

After the stacking step 6, a drying step 8 is carried out on the loosely packed bed. The drying step 8 comprises applying multimode microwave energy to the bed to reduce the moisture content of the dried snack food slices to an average of from 6 to 8 wt%, based on the total weight of the snack food slices, while maintaining the temperature of the bed to a value lower than a glass transition temperature of starch in the snack food slices, which is a temperature within the range of 100 to 110°C for potato as described above. Typically, the temperature of the bed is maintained below 100°C.

The drying step 8 is carried out for a period of from 30 to 180 seconds, optionally from 60 to 120 seconds.

The drying step 8 can preferably provide a moisture content of the dried snack food slices which has a smaller standard deviation than the moisture content of the cooked snack food slices provided by cooking step 4.

After the drying step 8 preferably substantially all, optionally at least 99 wt%, of the snack food slices each have a moisture content within the range of from 6 to 8 wt% based on the total weight of the snack food slice.

In the drying step 8 the microwave energy typically has a frequency of from 875 to 925 MHz, optionally about 900 MHz, or 2450 +/-50 MHz. The microwave frequency in both the cooking and drying steps 4, 8 may be the same.

After the drying step 8, the snack food slices are subjected to finish drying 10 in a hot air dryer to reduce the moisture content of the snack food slices to an average of from 1 to 2 wt% based on the total weight of the snack food slices. In the finish drying step 10, the hot air from the hot air dryer is typically at a temperature of greater than 100°C, optionally greater than 120°C.

Various modifications to the method of the invention as described herein will be apparent to those skilled in the art.

## Claims

1. A method of making snack foods, the method comprising the steps of:
i. a cooking step comprising microwave cooking a plurality of snack food slices to provide cooked snack food slices having an average moisture content of from 10 to 20 wt% based on the total weight of the snack food slices, the plurality of snack food slices being disposed in a layer having a first thickness during the microwave cooking;
ii. a stacking step of disposing the cooked snack food slices as a loosely packed bed having a second thickness of from 5 to 200 mm which is greater than the first thickness;
iii. a drying step comprising applying multimode microwave energy to the bed for a period of from 30 to 180 seconds to reduce the moisture content of the dried snack food slices to an average of from 6 to 8 wt% based on the total weight of the snack food slices while maintaining the temperature of the bed to a value which is lower than a glass transition temperature of starch in the snack food slices; and
iv. finish drying the snack food slices in a hot air dryer to reduce the moisture content of the snack food slices to an average of from 1 to 2 wt% based on the total weight of the snack food slices.

2. A method according to claim 1, wherein (a) the drying step iii provides a moisture content of the dried snack food slices which has a smaller standard deviation than the moisture content of the cooked snack food slices provided by cooking step i and/or (b) the drying step iii is carried out for a period of from 60 to 120 seconds.

3. A method according to any foregoing claim, wherein the second thickness is from 5 to 75 mm and/or wherein the first thickness is from 1 to less than 5 mm, optionally from 1 to 3 mm.

4. A method according to any foregoing claim, wherein after the drying step iii substantially all, optionally at least 99 wt%, of the snack food slices each have a moisture content within the range of from 6 to 8 wt% based on the total weight of the snack food slice.

5. A method according to any foregoing claim, wherein in the cooking step i the plurality of snack food slices are disposed in a monolayer with substantially all, optionally at least 80%, of the snack food slices being free from contact with any other snack food slice.

6. A method according to any foregoing claim, wherein in the drying step iii the bed of snack food slices comprises a plurality of sub-layers of the snack food slices, optionally wherein in each sub-layer the snack food slices are substantially commonly oriented, further optionally wherein in each sub-layer the snack food slices are oriented within an angle of +/-30 degrees to the horizontal.

7. A method according to any foregoing claim, wherein in stacking step ii the cooked snack food slices are conveyed by a vibratory conveyor which increases the packing density and commonality of orientation of the cooked snack food slices in the loosely packed bed.

8. A method according to any foregoing claim, wherein the loosely packed bed comprises from 30 to 80 vol% air based on the total volume of the bed.

9. A method according to any foregoing claim, wherein in the cooking step i the moisture content of the snack food slices is reduced from an average value of at least 75 wt%, optionally about 80 wt%, based on the total weight of the snack food slices to the average moisture content of from 10 to 20 wt%, based on the total weight of the snack food slices, further optionally wherein in the cooking step i the moisture content of the snack food slices is reduced within a period of from 30 to 180 seconds, optionally from 60 to 120 seconds.

10. A method according to any foregoing claim, wherein (a) in the cooking step i the temperature of the snack food slices is maintained below 110°C, optionally below 100°C and/or (b) in the finish drying step iv the hot air from the hot air dryer is at a temperature of greater than 100°C, optionally greater than 120°C.

11. A method according to any foregoing claim, wherein (a) after the cooking step i the cooked snack food slices are substantially rigid, and optionally have substantially randomly shaped non-planar opposite major surfaces, and/or (b) after the cooking step i the cooked snack food slices are substantially free of surface water.

12. A method according to any foregoing claim, wherein in at least one or both of the cooking step i and the drying step iii the microwave energy has a frequency of from 875 to 925 MHz, optionally about 900 MHz, or 2450 +/-50 MHz

13. A method according to any foregoing claim, further comprising the step, before step i, of lipophilically conditioning the snack food slices by immersion in a vegetable oil at a temperature of from 80°C to less than 100°C, optionally about 90°C, for a period of from 60 to 120 seconds, optionally about 90 seconds.

14. A method according to any foregoing claim, wherein in step iii the temperature of the bed is maintained to a value below the glass transition temperature of starch in the snack food slices which is within the range of 100-110 °C, optionally 100 °C.

15. A method according to any foregoing claim, wherein the snack food slices are potato slices and the snack foods comprise potato chips.

## Patentansprüche

1. Ein Verfahren zur Herstellung von Imbissen, wobei das Verfahren aus den folgenden Schritten besteht:
i. einem Garungsschritt, bestehend aus dem Mikrowellengaren einer Mehrzahl von Imbissscheiben zur Herstellung von gegarten Imbissscheiben mit einem durchschnittlichen Feuchtigkeitsgehalt von 10 bis 20 Gewichtsprozent des Gesamtgewichts der Imbissscheiben, wobei die Mehrzahl von Imbissscheiben in einer Schicht angeordnet wird, die während des Mikrowellengarens eine erste Dicke aufweist;
ii. einem Stapelschritt zur Anordnung der gegarten Imbissscheiben als locker verpackte Schicht mit einer zweiten Dicke von 5 bis 200 mm, die größer ist als die erste Dicke;
iii. einem Trocknungsschritt, der die Anwendung von Multimode-Mikrowellenenergie auf die Schicht für einen Zeitraum von 30 bis 180 Sekunden zur Verringerung des Feuchtigkeitsgehalts der getrockneten Imbissscheiben auf durchschnittlich 6 bis 8 Gewichtsprozent des Gesamtgewichts der Imbissscheiben unter Beibehaltung der Temperatur der Schicht auf einem Wert, der niedriger liegt als eine Glasübergangstemperatur von Stärke in den Imbissscheiben; und
iv. abschließendes Trocknen der Imbissscheiben in einem Heißlufttrockner zur Verringerung des Feuchtigkeitsgehalts der Imbissscheiben auf durchschnittlich 1 bis 2 Gewichtsprozent des Gesamtgewichts der Imbissscheiben.

2. Ein Verfahren gemäß Anspruch 1, bei dem (a) der Trocknungsschritt iii zu einem Feuchtigkeitsgehalt der getrockneten Imbissscheiben führt, der eine geringere Standardabweichung als der Feuchtigkeitsgehalt der im Garungsschritt i hergestellten gegarten Imbissscheiben aufweist, und/oder (b) der Trocknungsschritt iii für einen Zeitraum von 30 bis 180 Sekunden durchgeführt wird.

3. Ein Verfahren gemäß einem der vorangegangenen Ansprüche, bei dem die zweite Dicke zwischen 5 und 75 mm liegt und/oder bei dem die erste Dicke zwischen 1 und weniger als 5 mm und optional zwischen 1 und 3 mm liegt.

4. Ein Verfahren gemäß einem der vorangegangenen Ansprüche, bei dem nach dem Trocknungsschritt iii im Wesentlichen alle oder optional mindestens 99 Gewichtsprozent der Imbissscheiben jeweils einen Feuchtigkeitsgehalt im Bereich von 6 bis 8 Gewichtsprozent des Gesamtgewichts der Imbissscheiben aufweisen.

5. Ein Verfahren gemäß einem der vorangegangenen Ansprüche, bei dem im Garungsschritt i die Mehrzahl der Imbissscheiben in einer Einzelschicht angeordnet wird, wobei im Wesentlichen alle oder optional mindestens 80 % der Imbissscheiben nicht im Kontakt mit anderen Imbissscheiben stehen.

6. Ein Verfahren gemäß einem der vorangegangenen Ansprüche, bei dem im Trocknungsschritt iii die Schicht der Imbissscheiben eine Mehrzahl von Unterschichten von Imbissscheiben umfasst, wobei optional die Imbissscheiben in jeder Unterschicht im Wesentlichen gleich ausgerichtet sind und wobei optional die Imbissscheiben zusätzlich in jeder Unterschicht in einem Winkel von +/- 30 Grad zur Horizontalen ausgerichtet sind.

7. Ein Verfahren gemäß einem der vorangegangenen Ansprüche, bei dem im Stapelschritt ii die gegarten Imbissscheiben durch einen Schwingförderer befördert werden, der die Verpackungsdichte und Gleichmäßigkeit der Ausrichtung der gegarten Imbissscheiben in der locker verpackten Schicht erhöht.

8. Ein Verfahren gemäß einem der vorangegangenen Ansprüche, bei dem die locker verpackte Schicht gemessen am Gesamtvolumen der Schicht zwischen 30 und 80 Volumenprozent Luft umfasst.

9. Ein Verfahren gemäß einem der vorangegangenen Ansprüche, bei dem im Garungsschritt i der Feuchtigkeitsgehalt der Imbissscheiben von einem Durchschnittswert von mindestens 75 Gewichtsprozent und optional ungefähr 80 Gewichtsprozent des Gesamtgewichts der Imbissscheiben auf einen durchschnittlichen Feuchtigkeitsgehalt von 10 bis 20 Gewichtsprozent des Gesamtgewichts der Imbissscheiben reduziert wird und wobei zusätzlich optional der Feuchtigkeitsgehalt der Imbissscheiben im Garungsschritt i innerhalb eines Zeitraums von 30 bis 180 Sekunden und optional von 60 bis 120 Sekunden reduziert wird.

10. Ein Verfahren gemäß einem der vorangegangenen Ansprüche, bei dem (a) im Garungsschritt i die Temperatur der Imbissscheiben unter 110 °C und optional unter 100 °C gehalten wird und/oder (b) im abschließenden Trocknungsschritt iv die Heißluft des Heißlufttrockners eine Temperatur über 100 °C und optional über 120 °C aufweist.

11. Ein Verfahren gemäß einem der vorangegangenen Ansprüche, bei dem (a) die gegarten Imbissscheiben nach dem Garungsschritt i im Wesentlichen steif sind und optional im Wesentlichen zufällig geformte, nicht planare gegenüberliegende große Oberflächen aufweisen und/oder (b) die gegarten Imbissscheiben nach dem Garungsschritt i im Wesentlichen frei von Oberflächenwasser sind.

12. Ein Verfahren gemäß einem der vorangegangenen Ansprüche, bei dem im Garungsschritt i, im Trocknungsschritt iii oder in beiden Schritten die Mikrowellenenergie eine Frequenz von 875 bis 925 MHz bzw. optional ungefähr 900 MHz oder 2450 +/-50 MHz aufweist.

13. Ein Verfahren gemäß einem der vorangegangenen Ansprüche, das vor Schritt i einen zusätzlichen Schritt umfasst, bei dem die Imbissscheiben durch Eintauchen in ein Pflanzenöl mit einer Temperatur von 80 °C bis unter 100 °C und optional von 90 °C während eines Zeitraums von 60 bis 120 Sekunden und optional von ungefähr 90 Sekunden lipophil behandelt werden.

14. Ein Verfahren gemäß einem der vorangegangenen Ansprüche, bei dem in Schritt iii die Temperatur der Schicht auf einem Wert unter der Glasübergangstemperatur von Stärke in den Imbissscheiben gehalten wird, welcher sich im Bereich von 100-110 °C und optional von 100 °C bewegt.

15. Ein Verfahren gemäß einem der vorangegangenen Ansprüche, bei dem es sich bei den Imbissscheiben um Kartoffelscheiben und bei dem Imbiss um Kartoffelchips handelt.

## Revendications

1. Procédé de fabrication d'aliments en-cas, le procédé comprenant les étapes consistant en :
i. une étape de cuisson comportant une cuisson au micro-ondes pour cuire une pluralité d'en-cas en tranches pour produire des en-cas en tranches cuits ayant une teneur en humidité moyenne de 10 à 20 % en poids basée sur le poids total des en-cas en tranches, la pluralité des en-cas en tranches étant disposée dans une couche comportant une première épaisseur au cours de la cuisson au micro-ondes ;
ii. une étape d'empilage consistant à disposer les en-cas en tranches cuits sous la forme d'un lit légèrement tassé ayant une deuxième épaisseur de 5 à 200 mm, supérieure à la première épaisseur ;
iii. une étape de séchage consistant à applique une énergie de micro-ondes multi-mode sur le lit pendant une période de temps de 30 à 180 secondes, pour réduire la teneur en humidité des en-cas en tranches séchés à une moyenne de 6 à 8 % en poids basée sur le poids total des en-cas en tranches, tout en maintenant la température du lit à une valeur inférieure à une température de transition vitreuse de l'amidon contenu dans les en-cas en tranches ; et
iv. une étape consistant à terminer le séchage des en-cas en tranches, dans un séchoir à air chaud, pour réduire la teneur en humidité des en-cas en tranches à une moyenne de 1 à 2 % en poids basée sur le poids total des en-cas en tranches.

2. Procédé selon la revendication 1, dans lequel (a) l'étape de séchage iii fournit une teneur en humidité des en-cas en tranches séchés, dont la teneur en humidité s'écarte légèrement de la teneur en humidité des en-cas en tranches cuits que fournit l'étape de cuisson i et/ou (b) l'étape de séchage iii a lieu durant une période de temps de 60 à 120 secondes.

3. Procédé selon l'une quelconque des revendications précédentes, dans lequel la deuxième épaisseur est de 5 à 75 mm et/ou dans lequel la première épaisseur est de 1 à moins de 5 m, éventuellement de 1 à 3 mm.

4. Procédé selon l'une quelconque des revendications précédentes, dans lequel une fois l'étape de séchage terminée iii, la quasi-totalité, éventuellement au moins 99 % en poids, des en-cas en tranches ont chacun une teneur en humidité se situant dans la plage de 6 à 8 % en poids basée sur le poids total de l'en-cas en tranche.

5. Procédé selon l'une quelconque des revendications précédentes, dans lequel au cours de l'étape de cuisson i la pluralité des en-cas en tranches sont disposés dans une monocouche avec la quasi-totalité, éventuellement au moins 80 %, des en-cas en tranches n'étant pas en contact avec tout autre en-cas en tranche.

6. Procédé selon l'une quelconque des revendications précédentes, dans lequel au cours de l'étape de séchage iii le lit d'en-cas en tranches comporte une pluralité de sous-couches des en-cas en tranches, éventuellement dans lequel dans chaque sous-couche les en-cas en tranches sont sensiblement orientées de façon similaire, en outre éventuellement dans lequel dans chaque sous-couche les en-cas en tranches sont orientés selon un angle de +/- 30 degrés par rapport à l'horizontale.

7. Procédé selon l'une quelconque des revendications précédentes, dans lequel au cours de l'étape d'empilage ii les en-cas en tranches cuits sont déplacés par un convoyeur vibratoire qui accroît la densité d'empaquetage et la similarité d'orientation des en-cas en tranches cuits dans le lit légèrement tassé.

8. Procédé selon l'une quelconque des revendications précédentes, dans lequel le lit légèrement tassé comprend un volume d'air de 30 à 80 % basé sur le volume total du lit.

9. Procédé selon l'une quelconque des revendications précédentes, dans lequel au cours de l'étape de cuisson i la teneur en humidité des en-cas en tranches est réduite d'une valeur moyenne d'au moins 75 % en poids, éventuellement autour de 80 % en poids basée sur le poids total des en-cas en tranches, à une teneur en humidité moyenne de 10 à 20 % en poids basée sur le poids total des en-cas en tranches, en outre éventuellement dans lequel au cours de l'étape de cuisson i la teneur en humidité des en-cas en tranches est réduite durant une période de temps de 30 à 180 secondes, éventuellement de 60 à 120 secondes.

10. Procédé selon l'une quelconque des revendications précédentes, dans lequel (a) au cours de l'étape de cuisson i la température des en-cas en tranches est maintenue en deçà de 110 °C, éventuellement en deçà de 100 °C et/ou (b) au cours de l'étape de séchage de finition iv l'air chaud en provenance du séchoir à air chaud se trouve à une température supérieure à 100 °C, éventuellement supérieure à 120 °C.

11. Procédé selon l'une quelconque des revendications précédentes, dans lequel (a) une fois l'étape de cuisson i terminée les en-cas en tranches cuits sont sensiblement rigides, et éventuellement comportent de larges surfaces opposées non planes ayant des formes quelconques, et/ou (b) une fois l'étape de cuisson i terminée les en-cas en tranches cuits ne contiennent pratiquement plus d'eau de surface.

12. Procédé selon l'une quelconque des revendications précédentes, dans lequel au cours d'au moins l'une ou des deux étape de cuisson i et étape de séchage iii l'énergie de micro-ondes a une fréquence de 875 à 925 MHz, éventuellement d'environ 900 MHz, ou de 2450 +/-50 MHz.

13. Procédé selon l'une quelconque des revendications précédentes, comprenant en outre l'étape, avant l'étape i, consistant à de manière lipophile conditionner les en-cas en tranches en les baignant dans une huile végétale à une température de 80 °C à moins de 100 °C, éventuellement à environ 90 °C, pendant une période de temps de 60 à 120 secondes, éventuellement pendant environ 90 secondes.

14. Procédé selon l'une quelconque des revendications précédentes, dans lequel au cours de l'étape iii la température du lit est maintenue à une valeur inférieure à la température de transition vitreuse de l'amidon contenu dans les en-cas en tranches, qui se situe dans la plage de 100-110 °C, éventuellement à 100 °C.

15. Procédé selon l'une quelconque des revendications précédentes, dans lequel les en-cas en tranches sont des tranches de pommes de terre et les en-cas en tranches comprennent des croustilles.
